# EUROPÄISCHE PATENTSCHRIFT

(11) **EP 3 374 249 B1**
(45) Veröffentlichungstag und Bekanntmachung des Hinweises auf die Patenterteilung: **09.06.2021**
(21) Anmeldenummer: 16760722.5
(22) Anmeldetag: 06.09.2016
(51) Int. Cl.: B62D 21/00, B62D 25/00, B62D 29/00, B62D 29/04

(54) **STRUKTURBAUTEIL FÜR EIN KRAFTFAHRZEUG**
STRUCTURAL COMPONENT FOR A MOTOR VEHICLE
ÉLÉMENT DE STRUCTURE POUR VÉHICULE AUTOMOBILE

(30) Priorität: 10.11.2015 DE 102015222055
(43) Veröffentlichungstag der Anmeldung: 19.09.2018
(73) Patentinhaber: Bayerische Motoren Werke Aktiengesellschaft, 80809 München (DE)
(72) Erfinder: HOFMANN, Mathias, 80807 München (DE); KLEINKNECHT, Michael, 80335 München (DE); MIADOWITZ, Thomas, 84030 Ergolding (DE); STAUDT, Bernhard, 80797 München (DE); HORVAT, Daniela, 84034 Landshut (DE); SPIRKL, Florian, 84155 Bodenkirchen (DE)
(86) Internationale Anmeldenummer: PCT/EP2016/070925
(87) Internationale Veröffentlichungsnummer: WO 2017/080697

(56) Entgegenhaltungen:
- DE-A1-102009 007 122
- DE-A1-102009 051 460
- DE-A1-102010 037 459
- DE-A1-102013 208 265
- DE-A1-102013 222 016

## Beschreibung

Die vorliegende Erfindung betrifft ein Strukturbauteil für ein Kraftfahrzeug, aufweisend ein Hohlprofil aus Faserverbundmaterial mit einem Profilmantel, der ein Profilvolumen umgibt, und wenigstens ein Verstärkungsschott, das im Profilvolumen an zumindest einem Abschnitt einer Innenmantelfläche des Profilmantels angeordnet ist.

Im Stand der Technik sind Karosseriestrukturen, die mittels Blech-Schalenbauweise hergestellt sind, bekannt. Hier lassen sich sämtliche Lasteinleitungselemente vergleichsweise einfach integrieren, da die Bauteile offen und damit zugänglich sind. Für eine Gewichtsreduktion werden Karosseriestrukturen immer häufiger unter Verwendung von faserverstärkten Kunststoffen gefertigt. Hier wird vorrangig mit flächigen RTM- und Nasspressbauteilen in Schalenbauweise gearbeitet. Der bei der Herstellung entstehende Verschnitt ist dabei ein erheblicher Kostentreiber. Um diesen zu reduzieren, sollen Flechtprofile verwendet werden. Flechtprofile sind verschnittarm und hochsteif bei entsprechend niedrigem Gewicht. Da Hohlprofile nach dem Flechten jedoch nicht mehr zugänglich sind, werden aktuell Guss- oder Pressknoten von außen nachträglich aufgeklebt. Eine weitere Lasteinleitungsmöglichkeit kann durch Lochen des Profils und Einsetzen von metallischen Verbindungselementen generiert werden.

Aus der WO 2014/018848 A1 ist ein Strukturbauteil mit einer Vorrichtung zum Einlaminieren eines Krafteinleitungspunkts in ein Faserverbundbauteil bekannt, wobei die Vorrichtung aus einer Hülse mit einer fest angebundenen Grundplatte besteht. Aus der DE 10 2012 011 860 A1 ist ferner ein Strukturbauteil mit einem aus faserverstärktem Kunststoff gebildeten Grundbauteil bekannt, wobei das Grundbauteil mit einem darin verstrebten Verbindungselement ausgebildet ist.

Aus den Schriften DE 10 2010 037 459 A1 und DE 10 2013 222 016 A1 sind gattungsgemäße Vorrichtungen bekannt.

Bei sämtlichen im Stand der Technik bekannten Varianten von Strukturbauteilen sind nachgeschaltete Prozessschritte wie Fräsen, Bohren oder Kleben sowie Schraub-, Aushärte- und/oder Abkühlvorgänge unabdingbar. Zudem sind die mechanische Stabilität insbesondere bei Schalenbauteilen nicht optimal und der Bauraumbedarf hoch.

Aufgabe der vorliegenden Erfindung ist es, die voranstehend beschriebenen Nachteile bei Strukturbauteilen für Kraftfahrzeuge zumindest teilweise zu beheben. Insbesondere ist es Aufgabe der vorliegenden Erfindung, ein einfach herzustellendes, gewichtsreduziertes Strukturbauteil für ein Kraftfahrzeug mit möglichst hoher Festigkeit und/oder Steifigkeit bereitzustellen.

Die voranstehende Aufgabe wird durch Patentanspruch 1 gelöst. Weitere Merkmale und Details der Erfindung ergeben sich aus den Unteransprüchen, der Beschreibung und den Zeichnungen.

Gemäß der vorliegenden Erfindung wird ein Strukturbauteil für ein Kraftfahrzeug bereitgestellt, aufweisend ein geschlossenes Hohlprofil aus Faserverbundmaterial mit einem Profilmantel, der ein Profilvolumen umgibt, und wenigstens ein Verstärkungsschott, das im Profilvolumen an zumindest einem Abschnitt einer Innenmantelfläche des Profilmantels angeordnet ist. Erfindungsgemäß weist das wenigstens eine Verstärkungsschott an wenigstens einer Stelle, an welcher das wenigstens eine Verstärkungsschott an der Innenmantelfläche angeordnet ist, senkrecht von der Innenmantelfläche ausgehend eine Höhe auf, die niedriger als eine Durchgangshöhe des Profilvolumens an dieser Stelle ist.

Das heißt, das erfindungsgemäße Strukturbauteil weist wenigstens ein Verstärkungsschott auf, das sich an der wenigstens einen Stelle nicht über die gesamte Höhe des geschlossenen Hohlprofils erstreckt bzw. nur im Bereich von beispielsweise drei oder weniger Seitenflächen der Innenmantelfläche angeordnet ist. Mit anderen Worten, das Verstärkungsschott weist an wenigstens einer Stelle, an welcher das Verstärkungsschott an der Innenmantelfläche des Profilvolumens anliegt, senkrecht von der Innenmantelfläche ausgehend eine Höhe auf, die orthogonal zu einer Durchgangsrichtung des geschlossenen Hohlprofils in einem Bereich im Profilvolumen, in welchem das Verstärkungsschott angeordnet ist, niedriger als eine Durchgangshöhe des Profilvolumens in diesem Bereich ist. D.h., das wenigstens eine Verstärkungsschott ist bevorzugt nicht vollumlaufend an der Innenmantelfläche des Profilmantels ausgebildet. Dadurch, dass sich das wenigstens eine Verstärkungsschott an der wenigstens einen Stelle nicht über die gesamte Durchgangshöhe des Profilvolumens erstreckt, kann mit Bezug auf das Strukturbauteil eine hervorragende Platz- und Gewichtsersparnis erzielt werden.

Die Höhe des wenigstens einen Verstärkungsschotts an der wenigstens einen Stelle ist bevorzugt deutlich niedriger als die Durchgangshöhe, beispielsweise niedriger als 80%, besonders bevorzugt niedriger als 50% der Durchgangshöhe des Profilvolumens an dieser Stelle. In Abhängigkeit der zu erzielenden Verstärkung durch das wenigstens eine Verstärkungsschott kann die Höhe an der wenigstens einen Stelle in diesem Bereich auch deutlich unter 50% der Durchgangshöhe des Profilvolumens betragen.

Von weiterem Vorteil kann es sein, wenn das wenigstens eine Verstärkungsschott an keiner Stelle eine Höhe aufweist, die der Durchgangshöhe des Profilvolumens entspricht. D.h., das wenigstens eine Verstärkungsschott kann an jeder Stelle eine Höhe aufweisen bzw. eine maximale Höhe aufweisen, die niedriger als die Durchgangshöhe des Profilvolumens ist. Dadurch kann eine besonders vorteilhafte Platz- und Gewichtsersparnis erzielt werden. Die maximale Höhe des wenigstens einen Verstärkungsschotts kann bevorzugt niedriger als 80%, besonders bevorzug niedriger als 60% der Durchgangshöhe des Profilvolumens im Bereich des wenigstens einen Verstärkungsschotts sein.

Unter der Höhe an der Stelle, an welcher das wenigstens eine Verstärkungsschott an der Innenmantelfläche angeordnet ist, ist eine Höhe zu verstehen, deren Ausdehnung von der Innenmantelfläche des Profilmantels ausgehend parallel zu der Durchgangshöhe des Profilvolumens verläuft. Die Höhe an dieser Stelle ist als gesamte Höhe des wenigstens einen Verstärkungsschotts einschließlich Materialunterbrechungen zu verstehen.

Das erfindungsgemäße Strukturbauteil wird bevorzugt mittels eines Flechtverfahrens hergestellt. Hierbei wird beispielsweise ein aufblasbarer Kern bzw. ein Blaskern in seiner volumenreduzierten und damit luftentleerten Form an dem Verstärkungsschott angeordnet. Anschließend kann der Blaskern seine finale und maximale Volumenerstreckung erhalten, indem er aufgeblasen wird. Diese Form kann auch in aufbauender Weise, zum Beispiel durch Rapid-Prototyping-Verfahren schichtweise aufbauend durch Sand- oder Salzkerne oder andere Materialien erzeugt werden. Ein dadurch hergestelltes Halbzeug kann nun in den Flechtprozess eingebracht werden. Nachdem der Flechtprozess abgeschlossen ist, kann der Blaskern wieder entleert und in seine volumenreduzierte Form zurückgeführt werden.

Dadurch, dass das wenigstens eine Verstärkungsschott an der wenigstens einen Stelle eine Höhe aufweist, die niedriger als eine Durchgangshöhe des Profilvolumens an dieser Stelle ist, kann ein vorstehend beschriebener Blaskern nach Abschluss eines Flechtprozesses auf besonders einfache Weise aus dem Strukturbauteil entfernt bzw. herausgezogen werden.

Ein Verstärkungsschott ist im Sinne der vorliegenden Erfindung eine geometrische Konstruktion, welche im geschlossenen Hohlprofil ein Verstärkungselement ausbildet, um entsprechend eine Kraftübertragung und Krafteinwirkung für das geschlossene Hohlprofil zu verbessern. Unter einem geschlossenen Hohlprofil ist vorliegend ein Hohlprofil zu verstehen, dass zumindest im Bereich des wenigstens einen Verstärkungsschotts einen umlaufend geschlossenen Profilmantel-Abschnitt bildet. Die Stirnseiten des geschlossenen Hohlprofils müssen nicht geschlossen sein. Das geschlossene Hohlprofil ist insbesondere von nicht-geschlossenen Hohlprofilen zu unterscheiden, die beispielsweise in Schalenbauweise hergestellt sind oder einen im Schnitt C-förmigen oder im Wesentlichen C-förmigen Profilmantel aufweisen. Unter einem geschlossenen Hohlprofil ist beispielsweise ein rohrförmiges oder im Wesentlichen rohrförmiges Profil zu verstehen, das selbstverständlich nicht auf eine bestimmte geometrische Querschnittsform beschränkt ist.

Das wenigstens eine Verstärkungsschott ist bevorzugt in einem Lasteinleitungsbereich im geschlossenen Hohlprofil angeordnet. Das wenigstens eine Verstärkungsschott weist für eine besonders hohe Festigkeit und/oder Steifigkeit bevorzugt Metall oder eine Metalllegierung aus Stahl, Edelstahl und/oder Aluminium auf oder ist daraus hergestellt. Das wenigstens eine Verstärkungsschott kann alternativ oder zusätzlich auch aus thermoplastischem Spritzguss hergestellt sein. Dies führt zu einer weiteren Gewichtsreduktion des erfindungsgemäßen Strukturbauteils.

Außerdem kann es von Vorteil sein, wenn im Falle eines gefrästen Verstärkungsschotts ein Vorsprung von einer Außenmantelfläche des wenigstens einen Verstärkungsschotts hervorsteht, der ohne weitere Maßnahmen umflechtbar ist und am fertigen Strukturbauteil als Positionierungselement für die Weiterverarbeitung dienen kann. Der Vorsprung ist in diesem Fall derart zu umflechten bzw. umflochten, dass er durch die Flechtstruktur nicht bedeckt wird bzw. aus derselben herausragt.

Darüber hinaus kann es von Vorteil sein, wenn das wenigstens eine Verstärkungsschott eine Rippenstruktur bzw. Rippengeometrie aufweist. Dadurch kann eine weitere Festigkeits- und/oder Steifigkeitssteigerung des Strukturbauteils bei verringertem Gesamtgewicht erzielt werden. Um ein unbeabsichtigtes Reißen des Blaskerns bei der vorstehend beschriebenen Herstellung des Strukturbauteils zu verhindern kann es von weiterem Vorteil sein, die Rippenstruktur des wenigstens einen Verstärkungsschotts nicht direkt an der Außenseite des wenigstens einen Verstärkungsschotts auszubilden oder die Rippenstruktur mittels eines Abdeckelements insbesondere gegenüber dem Blaskern entsprechend abzudecken. Alternativ ist es auch denkbar, die Rippenstruktur entsprechend stumpf auszubilden, beispielsweise mit einem entsprechenden Radius an den Rippen.

Bei der genauen geometrischen Auslegung des wenigstens einen Verstärkungsschotts ist die im Rahmen der vorliegenden Erfindung gemachte Erkenntnis zugrunde zu legen, dass bei einer Belastung des Strukturbauteils der Lastverlauf vom geschlossenen Hohlprofil über das wenigstens eine Verstärkungsschott wieder zurück in das geschlossene Hohlprofil geht.

Gemäß einer Weiterbildung der vorliegenden Erfindung ist es möglich, dass das wenigstens eine Verstärkungsschott in einer Seitenansicht im Wesentlichen dreiecks-, trapez- oder trichterförmig ausgebildet ist. Das wenigstens eine Verstärkungsschott ist bevorzugt derart ausgebildet, dass der mittlere Bereich des wenigstens einen Verstärkungsschotts möglichst viel Material aufweist, d.h., bevorzugt die längste Kante des dreiecks-, trapez- oder trichterförmig ausgebildeten Verstärkungsschotts an der Innenmantelfläche des Profilmantels angeordnet ist bzw. angrenzt. Dadurch kann eine Lasteinleitung an dieser Stelle des Strukturbauteils besonders vorteilhaft abgestützt werden.

Ferner ist es möglich, dass das wenigstens eine Verstärkungsschott in einem Randbereich, in welchem das wenigstens eine Verstärkungsschott an der Innenmantelfläche angeordnet ist, senkrecht von der Innenmantelfläche ausgehend eine Randhöhe aufweist, die niedriger als 50%, bevorzugt niedriger als 30%, besonders bevorzugt niedriger als 20% der Maximalhöhe des wenigstens einen Verstärkungsschotts ist. Durch den flachen Auslauf im Randbereich des wenigstens einen Verstärkungsschotts können besonders im Randbereich auftretende, versagenskritische Spannungsspitzen minimiert werden.

Außerdem ist es gemäß der vorliegenden Erfindung möglich, dass das wenigstens eine Verstärkungsschott mittels Klebeverbindung bzw. einer stoffschlüssigen Verbindung an der Innenmantelfläche des Profilmantels befestigt ist. Hierdurch ist das wenigstens eine Verstärkungsschott besonders bauraumsparend im Profilvolumen des Strukturbauteils angeordnet. Die Lastübertragung findet in diesem Fall grundsätzlich nur über die Klebeverbindung zwischen der Innenmantelfläche des Profilmantels und dem wenigstens einen Verstärkungsschott bzw. die entsprechenden Verbindungsflächen statt. Die Klebeverbindung wird bevorzugt beim Infiltrieren des geschlossenen Hohlprofils generiert. Auf zusätzliche Schraubverbindungen oder dergleichen kann hierbei verzichtet werden.

Darüber hinaus kann es erfindungsgemäß von Vorteil sein, wenn das wenigstens eine Verstärkungsschott formschlüssig an der Innenmantelfläche des Profilmantels angeordnet ist. Vorzugsweise weist das wenigstens eine Verstärkungsschott hierzu an wenigstens einer Stelle, an welcher das wenigstens eine Verstärkungsschott an der Innenmantelfläche angeordnet ist, senkrecht von der Innenmantelfläche ausgehend eine Höhe auf, die der Durchgangshöhe des Profilvolumens an dieser Stelle entspricht. Das wenigstens eine Verstärkungsschott ist hierzu beispielsweise zumindest abschnittsweise an zwei sich gegenüberliegenden Seiten der Innenmantelfläche angeordnet. Gemäß der vorliegenden Erfindung reicht es diesbezüglich aber auch aus, wenn sich das wenigstens eine Verstärkungsschott entsprechend teilweise an der Innenmantelfläche des Profilmantels abstützt. Insbesondere bei fünf- und mehrkantigen oder rohrförmigen, geschlossenen Hohlprofilen muss sich das wenigstens eine Verstärkungsschott nicht über die gesamte Durchgangshöhe erstrecken und kann dennoch formschlüssig an der Innenmantelfläche des Profilmantels angeordnet sein. Durch den erfindungsgemäßen Formschluss kann eine erhöhte Sicherheit bzw. eine höhere übertragbare Last an der entsprechenden Stelle des Strukturbauteils erzielt werden.

Ferner ist es möglich, dass in oder an dem wenigstens einen Verstärkungsschott ein Kopplungsmittel, insbesondere mit einer Durchgangsöffnung, ausgebildet ist, mittels welchem das Strukturbauteil mit einer externen Vorrichtung koppelbar ist. Ein Kopplungsmittel direkt an dem wenigstens einen Verstärkungsschott ermöglicht eine besonders sichere Kopplungsmöglichkeit für externe Vorrichtungen. Das Kopplungsmittel ist bevorzugt mit einer Durchgangsöffnung, die bevorzugt als Gewindegang bzw. -bohrung ausgebildet ist, ausgestaltet. Das Kopplungsmittel kann aber auch einen Vorsprung, insbesondere mit Rastmittel oder einem Außengewinde, aufweisen. Das erfindungsgemäße Kopplungsmittel weist bevorzugt eine Buchse auf, mit welcher eine externe Vorrichtung koppelbar, d.h., form- oder kraftschlüssig koppelbar ist. Für eine Kopplung mit der externen Vorrichtung ist es von Vorteil, wenn sich das Kopplungsmittel durch die Mantelfläche des geschlossenen Hohlprofils erstreckt. Dies kann beispielsweise durch einen entsprechenden Flechtprozess realisiert werden, wobei darauf zu achten ist, dass das verdrängte Faserverbundmaterial beim Flechten nicht über die Oberfläche des Kopplungselements übersteht. D.h., die Oberfläche des Kopplungselements befindet sich bevorzugt auf gleicher Höhe wie oder höher als die Oberfläche bzw. die äußere Oberfläche des Faserverbundmaterials des geschlossenen Hohlprofils. Hierdurch kann ein Korrosionsschutz gegenüber dem hoch korrosiven Kohlenstoff-Faserverbundmaterial erzielt werden. Alternativ kann der Zugang zum Kopplungsmittel auch durch ein nachträgliches Aufbohren des Profilmantels an der Stelle des Kopplungsmittels bzw. ein entsprechendes Freilegen des Kopplungsmittels an dieser Stelle realisiert werden.

Gemäß einer Weiterbildung der vorliegenden Erfindung kann im Bereich des Kopplungsmittels ein Zwischenelement zwischen dem wenigstens einen Verstärkungsschott und der Innenmantelfläche angeordnet sein, wobei dieses Zwischenelement korrosionsbeständiges Material aufweist oder aus demselben besteht, wodurch ein entsprechender Korrosionsschutz gewährleistet werden kann. Falls, wie vorstehend erwähnt, der Profilmantel an der Stelle des Kopplungsmittels freigelegt wird, ist der Einsatz des erfindungsgemäßen korrosionsbeständigen Zwischenelements von besonderem Vorteil. Das Zwischenelement ist entsprechend der geometrischen Ausgestaltung des Kopplungselements ausgebildet. Falls das Kopplungselement beispielsweise einen Gewindegang aufweist, ist das Zwischenelement bevorzugt als ringförmige Scheibe ausgebildet, die bevorzugt in das wenigstens eine Verstärkungsschott eingepresst ist. Genauer gesagt ist das Zwischenelement in diesem Fall derart in das wenigstens eine Verstärkungsschott eingepresst oder darin gelagert, dass es wenigstens teilweise zwischen dem wenigstens einen Verstärkungsschott und der Innenmantelfläche des Profilmantels angeordnet ist.

Ferner ist es möglich, dass das wenigstens eine Verstärkungsschott in einem Oberflächenbereich, der nicht mit der Innenmantelfläche in Verbindung steht, kontinuierlich ausgebildet ist. Unter einer kontinuierlichen Ausbildung ist im Sinne der vorliegenden Erfindung eine Ausbildung ohne Kanten zu verstehen. Dies ist bevorzugt durch eine monolithische Ausbildung des wenigstens einen Verstärkungsschotts zu realisieren. Dadurch, dass das wenigstens eine Verstärkungsschott in dem Oberflächenbereich, der nicht mit der Innenmantelfläche in Verbindung steht, kontinuierlich ausgebildet ist, kann ein unbeabsichtigtes Reißen eines Blaskerns bei einer wie vorstehend beschriebenen Herstellung des Strukturbauteils vermieden werden.

Außerdem kann es im Rahmen der vorliegenden Erfindung von Vorteil sein, wenn an dem wenigstens einen Verstärkungsschott zumindest eine Abrisskante ausgebildet ist, an welcher ein Blaskern, der relativ zu dem wenigstens einen Verstärkungsschott dasselbe berührend bewegt wird, gezielt aufreißbar ist. Dadurch ist es möglich, eine Sollrissstelle für einen Blaskern zu schaffen, der beispielsweise in zwei separate Blaskernhälften zerreißt, wenn er aus dem geschlossenen Hohlprofil gezogen wird. Dies kann zu einem vereinfachten Ausziehen des Blaskerns und mithin zu einer vereinfachten Herstellung des Strukturbauteils führen.

Darüber hinaus ist es erfindungsgemäß möglich, dass das Profilvolumen im Bereich des wenigstens einen Verstärkungsschotts, bevorzugt ausschließlich im Bereich des wenigstens einen Verstärkungsschotts, ausgeschäumt ist. Durch das Ausschäumen und insbesondere durch das lokale Ausschäumen im Bereich des wenigstens einen Verstärkungsschotts kann eine erhöhte lokale Bauteilsteifigkeit und/oder -festigkeit bei geringem Zusatzgewicht erzielt werden. Unter dem Bereich des wenigstens einen Verstärkungsschotts ist ein Abschnitt, insbesondere ein begrenzter Abschnitt des Profilvolumens zu verstehen, in welchem das wenigstens eine Verstärkungsschott angeordnet ist.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder der Zeichnung hervorgehende Merkmale und/oder Vorteile, einschließlich konstruktiver Einzelheiten und räumlicher An-ordnungen können sowohl für sich als auch in den verschiedenen Kombinationen erfindungswesentlich sein.

Es zeigen jeweils schematisch:
- Figur 1: ein Strukturbauteil in einer geschnittenen Vorderansicht gemäß einer ersten Ausführungsform der vorliegenden Erfindung,
- Figur 2: ein Strukturbauteil in einer geschnittenen Seitenansicht gemäß der ersten Ausführungsform der vorliegenden Erfindung,
- Figur 3: ein Strukturbauteil in einer geschnittenen Vorderansicht gemäß einer zweiten Ausführungsform der vorliegenden Erfindung,
- Figur 4: ein Strukturbauteil in einer geschnittenen Seitenansicht gemäß der zweiten Ausführungsform der vorliegenden Erfindung,
- Figur 5: ein Strukturbauteil in einer geschnittenen Vorderansicht gemäß einer dritten Ausführungsform der vorliegenden Erfindung,
- Figur 6: ein Strukturbauteil in einer geschnittenen Seitenansicht gemäß der dritten Ausführungsform der vorliegenden Erfindung,
- Figur 7: ein Strukturbauteil in einer geschnittenen Vorderansicht gemäß einer vierten Ausführungsform der vorliegenden Erfindung,
- Figur 8: ein Strukturbauteil in einer geschnittenen Seitenansicht gemäß der vierten Ausführungsform der vorliegenden Erfindung,
- Figur 9: ein Strukturbauteil in einer geschnittenen Vorderansicht gemäß einer fünften Ausführungsform der vorliegenden Erfindung, und
- Figur 10: ein Strukturbauteil in einer geschnittenen Seitenansicht gemäß der fünften Ausführungsform der vorliegenden Erfindung.

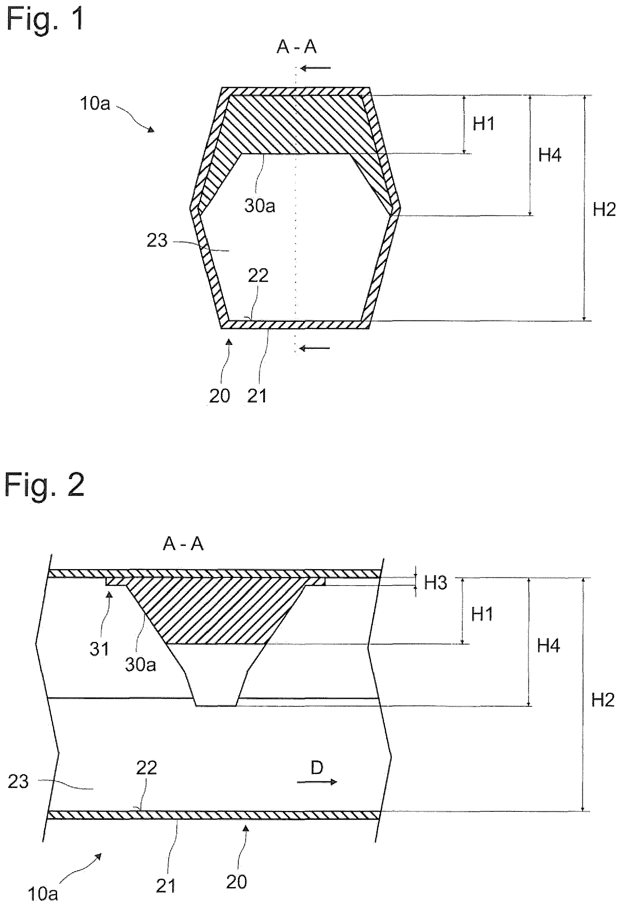

Elemente mit gleicher Funktion und Wirkungsweise sind in den Figuren 1 bis 10 jeweils mit denselben Bezugszeichen versehen.

In Fig. 1 ist schematisch ein erfindungsgemäßes Strukturbauteil 10a für ein Kraftfahrzeug gemäß einer ersten Ausführungsform dargestellt. Das Strukturbauteil 10a weist ein geschlossenes Hohlprofil 20 aus Faserverbundmaterial mit einem sechseckigen Profilmantel 21 auf. Der Profilmantel 21 umgibt ein Profilvolumen 23 und weist eine Innenmantelfläche 22 auf. An einem Abschnitt der Innenmantelfläche 22 des Profilmantels 21 und somit im Profilvolumen 23 ist ein Verstärkungsschott 30a angeordnet.

Das gemäß Fig. 1 dargestellte Verstärkungsschott 30a weist an einer Stelle bzw. in einem mittleren Bereich, an welcher bzw. in welchem das Verstärkungsschott 30a an der Innenmantelfläche 22 angeordnet ist, senkrecht von der Innenmantelfläche 22 ausgehend eine Höhe H1 auf, die deutlich niedriger als eine Durchgangshöhe H2 (eine Höhe orthogonal zur Durchgangsrichtung D) des Profilvolumens 23 an dieser Stelle ist. In einem äußeren Bereich weist das Verstärkungsschott 10a gemäß Fig. 1 seine Maximalhöhe H4 auf. In diesem Bereich ist das Verstärkungsschott formschlüssig an der Innenmantelfläche 22 des Profilmantels 21 angeordnet bzw. abgestützt. Hier ist das Verstärkungsschott 30a im Schnitt U- bzw. V-förmig oder im Wesentlichen U- bzw. V-förmig ausgebildet.

Das dargestellte Verstärkungsschott 30a muss sich dabei nicht, wie in Fig. 1 dargestellt, über die gesamte Breite des Profilvolumens 23 erstrecken. So kann das Verstärkungsschott 30a beispielsweise auch nur an einer oder zwei der sechs Seitenflächen der Innenmantelfläche 22 angeordnet sein.

Fig. 2 zeigt eine Seitenansicht des Strukturbauteils 10a gemäß der ersten Ausführungsform in einem Schnitt entlang der Linie A-A von Fig. 1. Wie in Fig. 2 zu erkennen, ist das Verstärkungsschott 30a in der Seitenansicht im Wesentlichen trichterförmig ausgebildet. In einem Randbereich 31 des Verstärkungsschotts 30a, in welchem das Verstärkungsschott 30a an der Innenmantelfläche 22 angeordnet ist, weist das Verstärkungsschott 30a senkrecht von der Innenmantelfläche 22 ausgehend eine Randhöhe H3 auf, die deutlich niedriger als die Maximalhöhe H4 des Verstärkungsschotts 30a ist.

Das in Fig. 1 und Fig. 2 dargestellte Verstärkungsschott 30a ist mittels Klebeverbindung an der Innenmantelfläche 22 des Profilmantels 21 befestigt.

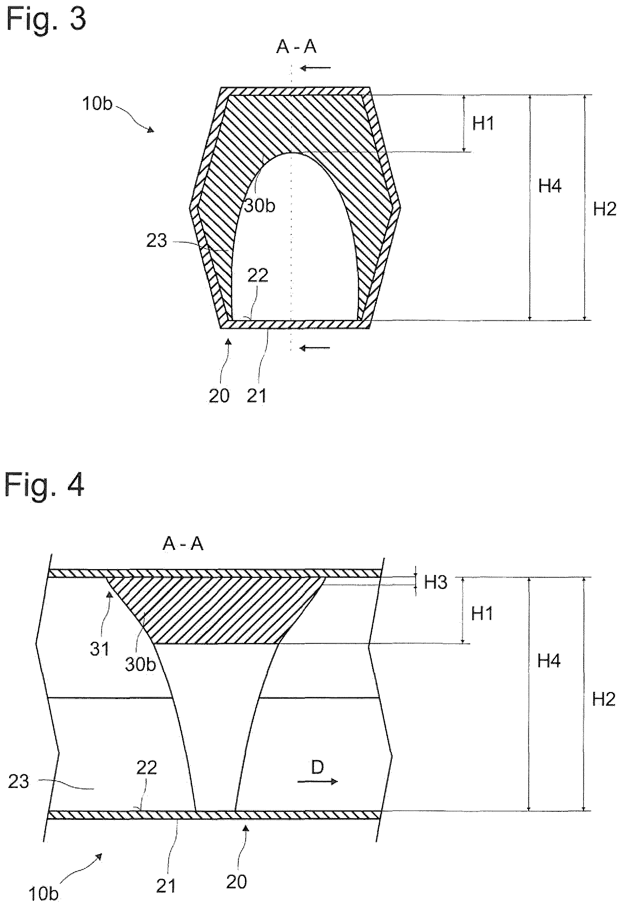

Mit Bezug auf Fig. 3 und Fig. 4 wird anschließend eine zweite Ausführungsform der vorliegenden Erfindung beschrieben. Fig. 3 und Fig. 4 zeigen ein Struktur-bauteil 10b, das ähnlich dem in Fig. 1 und Fig. 2 dargestellten Strukturbauteil 10a ist. Das Strukturbauteil 10b gemäß der zweiten Ausführungsform unterscheidet sich insbesondere dadurch von dem Strukturbauteil 10a der ersten Ausführungsform, dass das Verstärkungsschott 10b in einem Oberflächenbereich, der nicht mit der Innenmantelfläche 22 in Verbindung steht, kontinuierlich, also ohne Kanten, ausgebildet ist.

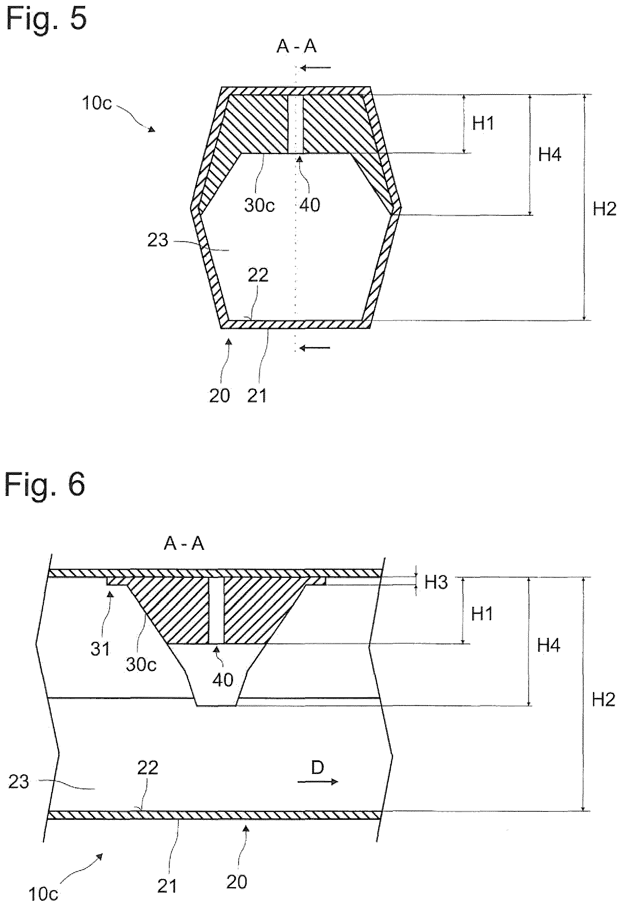

In Fig. 5 und Fig. 6 ist ein Strukturbauteil 10c gemäß einer dritten Ausführungsform der vorliegenden Erfindung dargestellt. Das in Fig. 5 und Fig. 6 dargestellte Strukturbauteil zeichnet sich insbesondere dadurch aus, dass in dem Verstärkungsschott 30c ein Kopplungsmittel 40 in Form einer Durchgangsöffnung ausgebildet ist, wobei die Durchgangsöffnung bevorzugt einen Gewindegang aufweist. Durch dieses Kopplungsmittel 40 ist das Strukturbauteil 10c bzw. das Verstärkungsschott 30c mit einer externen Vorrichtung koppelbar. Die externe Vorrichtung kann ein Achsträger, ein Lenker, eine Türanbindung oder eine ähnliche Vorrichtung für ein Kraftfahrzeug sein. Zum Verbinden der externen Vorrichtung mit dem Strukturbauteil 10c bzw. dem Verstärkungsschott 30c wird der Profilmantel 21 an der Stelle des Kopplungsmittels 40 geöffnet.

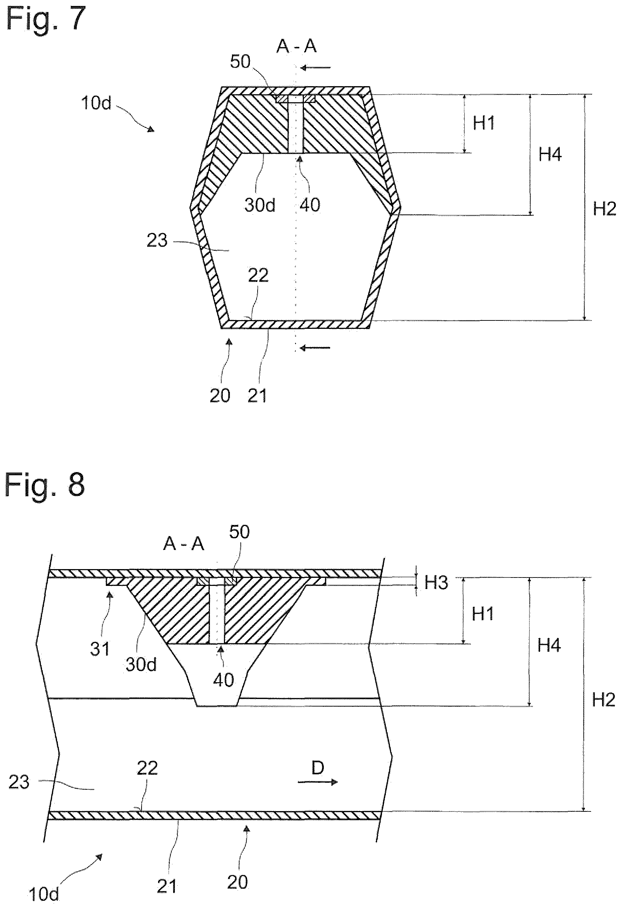

Das in Fig. 7 und Fig. 8 dargestellte Strukturbauteil 10d gemäß einer vierten Ausführungsform der vorliegenden Erfindung zeichnet sich insbesondere durch das Zwischenelement 50 aus, das im Bereich des Kopplungsmittels 40 zwischen dem Verstärkungsschott 30d und der Innenmantelfläche 22 angeordnet ist. Das Zwischenelement 50 ist gemäß Fig. 7 und Fig. 8 eine ringförmige Scheibe aus korrosionsbeständigem Material wie Aluminium oder Edelstahl, die in das Verstärkungsschott 30d eingepresst ist oder in eine entsprechende Ausnehmung in demselben eingelegt ist.

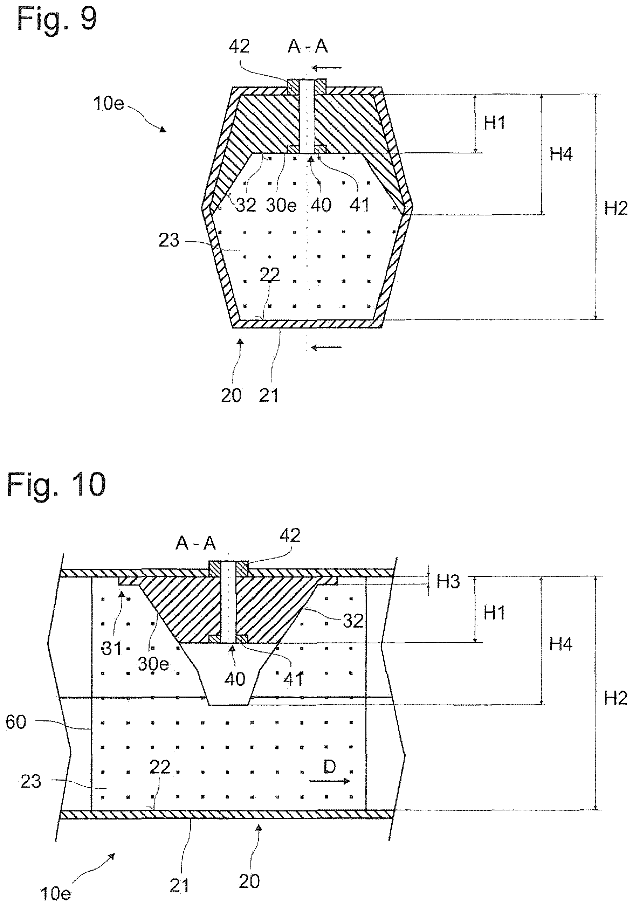

Fig. 9 und Fig. 10 zeigen ein Strukturbauteil 10e gemäß einer fünften Ausführungsform der vorliegenden Erfindung. An dem Verstärkungsschott 30e gemäß der fünften Ausführungsform sind mehrere Abrisskanten 32 ausgebildet, an welchen ein Blaskern, der relativ zu dem Verstärkungsschott 30e dasselbe be-rührend bewegt wird, gezielt aufreißbar ist. Ferner ist in Fig. 9 und Fig. 10 im Profilvolumen 23 im Bereich des Verstärkungsschotts 30e gepunktet ein aus-geschäumter Bereich 60 dargestellt.

Das Kopplungsmittel 40 ist gemäß der fünften Ausführungsform in Form einer Hülse mit einem Widerlager 41 und einem Überstand 42 ausgebildet. Durch das Widerlager 41 kann das Kopplungsmittel 40 bei einer Belastung bzw. einer Lasteinleitung besser im Verstärkungsschott 30e gehalten werden. Der Überstand 42 durchdringt den Profilmantel 21 gemäß Fig. 9 und Fig. 10 derart, dass er über die äußere Oberfläche des Profilmantels 21 bzw. des Hohlprofils 20 hinausragt. Trotz der Durchgangsöffnung im Profilmantel 21 ist das Hohlprofil 20 im Rahmen der vorliegenden Erfindung als geschlossenes oder zumindest als im Wesentlichen geschlossenes Hohlprofil zu verstehen.

Die zu den verschiedenen Ausführungsformen dargestellten Merkmale sind selbstverständlich nicht auf die jeweilige Ausführungsform beschränkt. Vielmehr können Merkmale, die zu einer Ausführungsform beschrieben wurden auch Gegenstand einer anderen Ausführungsform sein.

### Bezugszeichenliste

- 10: Strukturbauteil
- 20: geschlossenes Hohlprofil
- 21: Profilmantel
- 22: Innenmantelfläche
- 23: Profilvolumen
- 30: Verstärkungsschott
- 31: Randbereich
- 32: Abrisskante
- 40: Kopplungsmittel
- 41: Widerlager
- 42: Überstand
- 50: Zwischenelement
- 60: ausgeschäumter Bereich
- H1: Höhe des Verstärkungsschotts
- H2: Durchgangshöhe des Profilvolumens
- H3: Randhöhe
- H4: Maximalhöhe des Verstärkungsschotts

## Patentansprüche

1. Strukturbauteil (10a; 10b; 10c; 10d; 10e) für ein Kraftfahrzeug, aufweisend ein geschlossenes Hohlprofil (20) aus Faserverbundmaterial mit einem Profilmantel (21), der ein Profilvolumen (23) umgibt, und wenigstens ein Verstärkungsschott (30a; 30b; 30c; 30d; 30e), das im Profilvolumen (23) an zumindest einem Abschnitt einer Innenmantelfläche (22) des Profilmantels (21) angeordnet ist,
**dadurch gekennzeichnet, dass**
das wenigstens eine Verstärkungsschott (30a; 30b; 30c; 30d; 30e) an wenigstens einer Stelle, an welcher das wenigstens eine Verstärkungsschott (30a; 30b; 30c; 30d; 30e) an der Innenmantelfläche (22) angeordnet ist, senkrecht von der Innenmantelfläche (22) ausgehend eine Höhe (H1) aufweist, die niedriger als eine Durchgangshöhe (H2) des Profilvolumens (23) an dieser Stelle ist, wobei der Profilmantel (21) zumindest im Bereich des wenigstens einen Verstärkungsschotts (30a; 30b; 30c; 30d; 30e) einen umlaufend geschlossenen Profilmantel-Abschnitt (21) bildet.

2. Strukturbauteil (10a; 10b; 10c; 10d; 10e) nach Anspruch 1,
**dadurch gekennzeichnet, dass**
das wenigstens eine Verstärkungsschott (30a; 30b; 30c; 30d; 30e) in einer Seitenansicht im Wesentlichen dreiecks-, trapez- oder trichterförmig ausgebildet ist.

3. Strukturbauteil (10a; 10b; 10c; 10d; 10e) nach einem der vorstehenden Ansprüche,
**dadurch gekennzeichnet, dass**
das wenigstens eine Verstärkungsschott (30a; 30b; 30c; 30d; 30e) in einem Randbereich (31), in welchem das wenigstens eine Verstärkungsschott (30) an der Innenmantelfläche (22) angeordnet ist, senkrecht von der Innenmantelfläche (22) ausgehend eine Randhöhe (H3) aufweist, die niedriger als 50%, bevorzugt niedriger als 30%, besonders bevorzugt niedriger als 20% der Maximalhöhe (H4) des wenigstens einen Verstärkungsschotts (30a; 30b; 30c; 30d; 30e) ist.

4. Strukturbauteil (10a; 10b; 10c; 10d; 10e) nach einem der vorstehenden Ansprüche,
**dadurch gekennzeichnet, dass**
das wenigstens eine Verstärkungsschott (30a; 30b; 30c; 30d; 30e) mittels Klebeverbindung an der Innenmantelfläche (22) des Profilmantels (21) befestigt ist.

5. Strukturbauteil (10a; 10b; 10c; 10d; 10e) nach einem der vorstehenden Ansprüche,
**dadurch gekennzeichnet, dass**
das wenigstens eine Verstärkungsschott (30a; 30b; 30c; 30d; 30e) formschlüssig an der Innenmantelfläche (22) des Profilmantels (21) angeordnet ist.

6. Strukturbauteil (10c; 10d; 10e) nach einem der vorstehenden Ansprüche,
**dadurch gekennzeichnet, dass**
in oder an dem wenigstens einen Verstärkungsschott (30c; 30d; 30e) ein Kopplungsmittel (40), insbesondere mit einer Durchgangsöffnung, ausgebildet ist, mittels welchem das Strukturbauteil (10c; 10d; 10e) mit einer externen Vorrichtung koppelbar ist.

7. Strukturbauteil (10d) nach Anspruch 6,
**dadurch gekennzeichnet, dass**
im Bereich des Kopplungsmittels (40) ein Zwischenelement (50) zwischen dem wenigstens einen Verstärkungsschott (30d) und der Innenmantelfläche (22) angeordnet ist und dieses Zwischenelement (50) korrosionsbeständiges Material aufweist.

8. Strukturbauteil (10b) nach einem der vorstehenden Ansprüche,
**dadurch gekennzeichnet, dass**
das wenigstens eine Verstärkungsschott (30b) in einem Oberflächenbereich, der nicht mit der Innenmantelfläche (22) in Verbindung steht, kontinuierlich ausgebildet ist.

9. Strukturbauteil (10e) nach einem der vorstehenden Ansprüche,
**dadurch gekennzeichnet, dass**
an dem wenigstens einen Verstärkungsschott (30e) zumindest eine Abrisskante (32) ausgebildet ist, an welcher ein Blaskern, der relativ zu dem wenigstens einen Verstärkungsschott (30e) dasselbe berührend bewegt wird, gezielt aufreißbar ist.

10. Strukturbauteil (10e) nach einem der vorstehenden Ansprüche,
**dadurch gekennzeichnet, dass**
das Profilvolumen (23) im Bereich des wenigstens einen Verstärkungsschotts (30e), bevorzugt ausschließlich im Bereich des wenigstens einen Verstärkungsschotts (30e), ausgeschäumt ist.

## Claims

1. Structural component (10a; 10b; 10c; 10d; 10e) for a motor vehicle, having a closed hollow profile (20) made of fibre composite material with a profile casing (21) which surrounds a profile volume (23), and at least one reinforcing bulkhead (30a; 30b; 30c; 30d; 30e) which is arranged in the profile volume (23) on at least one portion of the inner lateral surface (22) of the profile casing (21),
**characterized in that**
the at least one reinforcing bulkhead (30a; 30b; 30c; 30d; 30e) has, at at least one point at which the at least one reinforcing bulkhead (30a; 30b; 30c; 30d; 30e) is arranged on the inner lateral surface (22), a height (H1), starting perpendicularly from the inner lateral surface (22), which is less than a passage height (H2) of the profile volume (23) at this point, wherein the profile casing (21) forms a circumferentially closed profile casing portion (21) at least in the region of the at least one reinforcing bulkhead (30a; 30b; 30c; 30d; 30e).

2. Structural component (10a; 10b; 10c; 10d; 10e) according to Claim 1,
**characterized in that**
the at least one reinforcing bulkhead (30a; 30b; 30c; 30d; 30e) is formed in a substantially triangular, trapezoidal or funnel-shaped manner in side view.

3. Structural component (10a; 10b; 10c; 10d; 10e) according to either of the preceding claims,
**characterized in that**
the at least one reinforcing bulkhead (30a; 30b; 30c; 30d; 30e) has, in a peripheral region (31) in which the at least one reinforcing bulkhead (30) is arranged on the inner lateral surface (22), a peripheral height (H3), starting perpendicularly from the inner lateral surface (22), which is less than 50%, preferably less than 30%, particularly preferably less than 20% of the maximum height (H4) of the at least one reinforcing bulkhead (30a; 30b; 30c; 30d; 30e).

4. Structural component (10a; 10b; 10c; 10d; 10e) according to one of the preceding claims,
**characterized in that**
the at least one reinforcing bulkhead (30a; 30b; 30c; 30d; 30e) is fastened to the inner lateral surface (22) of the profile casing (21) by means of an adhesive bond.

5. Structural component (10a; 10b; 10c; 10d; 10e) according to one of the preceding claims,
**characterized in that**
the at least one reinforcing bulkhead (30a; 30b; 30c; 30d; 30e) is arranged in a form-fitting manner on the inner lateral surface (22) of the profile casing (21).

6. Structural component (10c; 10d; 10e) according to one of the preceding claims,
**characterized in that**
a coupling means (40), in particular having a through-opening, is formed in or on the at least one reinforcing bulkhead (30c; 30d; 30e), the structural component (10c; 10d; 10e) being able to be coupled to an external device by means of said coupling means (40).

7. Structural component (10d) according to Claim 6,
**characterized in that,**
in the region of the coupling means (40), an intermediate element (50) is arranged between the at least one reinforcing bulkhead (30d) and the inner lateral surface (22), and this intermediate element (50) exhibits corrosion-resistant material.

8. Structural component (10b) according to one of the preceding claims,
**characterized in that**
the at least one reinforcing bulkhead (30b) is formed in a continuous manner in a surface region which is not connected to the inner lateral surface (22) .

9. Structural component (10e) according to one of the preceding claims,
**characterized in that**
at least one breaking edge (32), at which a blow core, which is movable relative to the at least one reinforcing bulkhead (30e) and in contact with the latter, is able to be ruptured in a targeted manner, is formed on the at least one reinforcing bulkhead (30e) .

10. Structural component (10e) according to one of the preceding claims,
**characterized in that**
the profile volume (23) is foam-filled in the region of the at least one reinforcing bulkhead (30e), preferably only in the region of the at least one reinforcing bulkhead (30e).

## Revendications

1. Élément de structure (10a ; 10b ; 10c ; 10d ; 10e) pour un véhicule automobile, comprenant un profilé creux fermé (20) constitué d'un matériau composite renforcé par des fibres doté d'une enveloppe de profilé (21) qui entoure un volume de profilé (23), et au moins une cloison de renforcement (30a ; 30b ; 30c ; 30d ; 30e) qui est disposée dans le volume de profilé (23) sur au moins une partie d'une surface d'enveloppe intérieure (22) de l'enveloppe de profilé (21),
**caractérisé en ce que**
l'au moins une cloison de renforcement (30a ; 30b ; 30c ; 30d ; 30e) présente, en au moins un point auquel l'au moins une cloison de renforcement (30a ; 30b ; 30c ; 30d ; 30e) est disposée sur la surface d'enveloppe intérieure (22), perpendiculairement à partir de la surface d'enveloppe intérieure (22), une hauteur (H1) qui est inférieure à une hauteur de passage (H2) du volume de profilé (23) en ce point, l'enveloppe de profilé (21) formant, au moins dans la région de l'au moins une cloison de renforcement (30a ; 30b ; 30c ; 30d ; 30e), une partie d'enveloppe de profilé (21) fermée de manière périphérique.

2. Élément de structure (10a ; 10b ; 10c ; 10d ; 10e) selon la revendication 1,
**caractérisé en ce que**
l'au moins une cloison de renforcement (30a ; 30b ; 30c ; 30d ; 30e) est réalisée sensiblement sous forme triangulaire, sous forme trapézoïdale ou en forme d'entonnoir dans une vue de côté.

3. Élément de structure (10a ; 10b ; 10c ; 10d ; 10e) selon l'une des revendications précédentes,
**caractérisé en ce que**
l'au moins une cloison de renforcement (30a ; 30b ; 30c ; 30d ; 30e) présente, dans une région de bord (31) dans laquelle l'au moins une cloison de renforcement (30) est disposée sur la surface d'enveloppe intérieure (22), perpendiculairement à partir de la surface d'enveloppe intérieure (22), une hauteur de bord (H3) qui est inférieure à 50%, de préférence inférieure à 30%, de manière particulièrement préférée inférieure à 20% de la hauteur maximale (H4) de l'au moins une cloison de renforcement (30a ; 30b ; 30c ; 30d ; 30e).

4. Élément de structure (10a ; 10b ; 10c ; 10d ; 10e) selon l'une des revendications précédentes,
**caractérisé en ce que**
l'au moins une cloison de renforcement (30a ; 30b ; 30c ; 30d ; 30e) est fixée à la surface d'enveloppe intérieure (22) de l'enveloppe de profilé (21) au moyen d'une liaison adhésive.

5. Élément de structure (10a ; 10b ; 10c ; 10d ; 10e) selon l'une des revendications précédentes,
**caractérisé en ce que**
l'au moins une cloison de renforcement (30a ; 30b ; 30c ; 30d ; 30e) est disposée avec complémentarité de forme sur la surface d'enveloppe intérieure (22) de l'enveloppe de profilé (21).

6. Élément de structure (10c ; 10d ; 10e) selon l'une des revendications précédentes,
**caractérisé en ce**
**qu'**un moyen d'accouplement (40) en particulier doté d'une ouverture de passage est réalisé dans ou sur l'au moins une cloison de renforcement (30c ; 30d ; 30e), moyen grâce auquel l'élément de structure (10c ; 10d ; 10e) peut être accouplé à un dispositif externe.

7. Élément de structure (10d) selon la revendication 6,
**caractérisé en ce**
**qu'**un élément intermédiaire (50) est disposé entre l'au moins une cloison de renforcement (30d) et la surface d'enveloppe intérieure (22) dans la région du moyen d'accouplement (40) et cet élément intermédiaire (50) comprend un matériau résistant à la corrosion.

8. Élément de structure (10b) selon l'une des revendications précédentes,
**caractérisé en ce que**
l'au moins une cloison de renforcement (30b) est réalisée de manière continue dans une région de surface qui n'est pas en liaison avec la surface d'enveloppe intérieure (22) .

9. Élément de structure (10e) selon l'une des revendications précédentes,
**caractérisé en ce**
**qu'**au moins une arête de rupture (32) est réalisée sur l'au moins une cloison de renforcement (30e), arête au niveau de laquelle un noyau de soufflage, qui est déplacé par rapport à l'au moins une cloison de renforcement (30e) et en contact avec celle-ci, peut être rompu de manière ciblée.

10. Élément de structure (10e) selon l'une des revendications précédentes,
**caractérisé en ce que**
le volume de profilé (23) est rempli de mousse dans la région de l'au moins une cloison de renforcement (30e), de préférence exclusivement dans la région de l'au moins une cloison de renforcement (30e).
